# EUROPEAN PATENT SPECIFICATION

(11) **EP 4 741 675 B1**
(45) Date of publication and mention of the grant of the patent: **26.08.2026**
(21) Application number: 25215071.9
(22) Date of filing: 11.11.2025
(51) Int. Cl.: F16C 32/04

(54) **MAGNETIC SUSPENSION BEARING CONTROL SYSTEM, CONTROL METHOD AND REFRIGERATION EQUIPMENT**
STEUERSYSTEM FÜR MAGNETAUFHÄNGUNGSLAGER, STEUERVERFAHREN UND KÜHLVORRICHTUNG
SYSTÈME DE COMMANDE DE PALIER DE SUSPENSION MAGNÉTIQUE, PROCÉDÉ DE COMMANDE ET ÉQUIPEMENT DE RÉFRIGÉRATION

(30) Priority: 12.11.2024 CN 202411611983
(43) Date of publication of application: 13.05.2026
(73) Proprietor: Carrier Corporation, Palm Beach Gardens, FL 33418 (US)
(72) Inventor: Chen, Kun, Shanghai, 201206 (CN); Zhang, Zhenyu, Shanghai, 201206 (CN)
(74) Representative: Dehns

(56) References cited:
- EP-A1- 0 430 009
- WO-A1-02/21674

## Description

### BACKGROUND

This application relates to the technical field of refrigeration equipment, in particular to a magnetic suspension bearing control system, a control method and refrigeration equipment.

In conventional refrigeration equipment based on a magnetic suspension bearing, there is usually no energy storage device, or even with batteries, the hardware topology of the magnetic suspension bearing and batteries is separate from a software control system thereof. This separation leads to the following problems:
energy waste: during operation of the system, especially when a compressor frequency changes, excess energy is not fully utilized and cannot be stored for backup;
dynamic performance degradation of magnetic suspension bearing: a traditional system requires time to adjust and stabilize the magnetic suspension bearing during startup and shutdown, and the dynamic performance of the bearing during frequency switching may degrade due to the lack of good energy allocation methods; and
poor system stability: when the system is suddenly powered off, there may be a risk of the magnetic suspension bearing falling, which may cause damage to the magnetic suspension bearing and cause abnormal operation of the system.

Therefore, it is necessary to improve the existing magnetic suspension bearing control system.

EP 0 430 009 A1 discloses an electrical power supply assembly for a vacuum pump whose rotor is mounted on magnetic bearings and driven in rotation by an electric motor of the type with a rotor having magnetic poles.

WO 02/21674 A1 discloses a power supply system for a high speed DC electric motor.

### SUMMARY

In view of the above problems, this application provides a magnetic suspension bearing control system according to a first aspect of the invention including: a magnetic suspension bearing control module configured to control a magnetic suspension bearing; a battery management module electrically connected to the magnetic suspension bearing control module; and a master control module connected to the magnetic suspension bearing control module and the battery management module, and configured to control the battery management module to store electric energy of the magnetic suspension bearing control module when a voltage of the magnetic suspension bearing control module is excessive, and supply power to the magnetic suspension bearing control module when the magnetic suspension bearing control module is underpowered, wherein the voltage of the magnetic suspension bearing control module is excessive when the voltage supplied to the magnetic suspension bearing is greater than a demand of the magnetic suspension bearing.

The technical effects mainly include the following aspects.

Improved system reliability and stability: Through the cooperation of the battery management module and the magnetic suspension bearing control module, the system can automatically provide the backup power when there is a problem with the power supply of the magnetic suspension bearing control module. In this way, when a main power supply fluctuates or is powered off, the magnetic suspension bearing (AMB) can still operate normally, thereby avoiding system failure or shutdown due to insufficient power supply. Especially in high-speed rotating machinery, the stability of the magnetic suspension bearing is critical, and this technology effectively improves the safety and stability of the system.

Energy saving and energy management optimization: In this technical solution, the battery management module stores redundant electric energy when a rotational speed demand of the magnetic suspension bearing is relatively low, and releases the stored electric energy when the magnetic suspension bearing is underpowered. The energy management mechanism not only improves the energy utilization efficiency of the system, but also reduces unnecessary energy waste. For example, when the system is in light load or a deceleration mode, an energy demand of the magnetic suspension bearing system is reduced, and the battery can effectively store this excess energy and release the excess energy when needed.

Improved dynamic performance and quick response to power supply demands: The battery management module in the system can quickly provide electric energy when the magnetic suspension bearing control module is underpowered, thereby ensuring continuous and stable operation of the magnetic suspension bearing system. This rapid response capability plays an important role especially when the power supply fluctuates, and can compensate for the power gap in time, thereby avoiding system performance degradation or sudden failures.

Modular and integrated design and reduced system cost: The master control module is connected to the magnetic suspension bearing control module and the battery management module, thereby implementing centralized control and coordinated operation of the system. Through the integrated control logic, the hardware and software architecture of the system are simplified, and the required control components and cables are reduced, which not only reduces the cost, but also reduces the occupied space of the system, thereby helping to improve the overall compactness and reliability of the equipment. In some embodiments, at least some of the circuits in the master control module, the magnetic suspension bearing control module and the battery management module can be integrated into one chip, and other peripheral circuits or peripheral circuits unsuitable for integration into the chip can be arranged adjacent to each other to reasonably utilize and save the space.

Enhanced system fault protection capability: In a critical application scenario, such as an industrial compressor or a turbine, a sudden power outage or insufficient power supply of the system may cause serious faults. In this solution, emergency power supply is provided for the magnetic suspension bearing through the battery, and continuous operation of the system is ensured when a power failure occurs, thereby avoiding unexpected shutdowns or equipment damage. This greatly improves the fault tolerance and fault recovery capability of the system.

The technical solution of the magnetic suspension bearing control system enhances the stability, energy efficiency and response speed of the system through the coordinated operation of the battery management module and the master control module, and effectively prolongs the service life of the equipment and reduces the maintenance cost. This integrated solution provides a safer, more reliable and economical operating environment for high-performance and high-precision mechanical equipment.

Optionally, the master control module includes: a charging and discharging signal generation module connected to a control terminal of the battery management module and configured to send a corresponding control signal to control charging/discharging of the battery management module based on a signal representing an excess/insufficient input voltage of the magnetic suspension bearing control module.

Optionally, the master control module further includes: a voltage determination module connected to the magnetic suspension bearing control module and the charging and discharging signal generation module, and configured to determine whether the input voltage of the magnetic suspension bearing control module is excessive/insufficient based on an electrical signal representing the input voltage of the magnetic suspension bearing control module.

Optionally, the master control module further includes: a magnetic suspension bearing control signal generation module connected to the magnetic suspension bearing control module and configured to send a corresponding control signal based on an operating status of the magnetic suspension bearing.

Optionally, the battery management module includes: a rechargeable battery; and a DCDC conversion unit connected to the magnetic suspension bearing control module, the master control module and the rechargeable battery, and configured to convert, in response to a control signal of the master control module, a charging voltage input by the magnetic suspension bearing control module to the rechargeable battery and a discharging voltage of the rechargeable battery so as to enable the charging voltage and the discharging voltage to be adapted to the battery management module and the magnetic suspension bearing control module.

Optionally, the DCDC conversion unit includes: an energy storage unit configured to temporarily store charging energy of the magnetic suspension bearing control module and discharging energy of the rechargeable battery; and a logic switch unit connected to the master control module and the energy storage unit, and configured to store energy in the energy storage unit through switch control in response to a signal sent by the master control module indicating that the voltage of the magnetic suspension bearing control module is excessive, and release the energy stored in the energy storage unit through switch control in response to a signal sent by the master control module indicating that the voltage of the magnetic suspension bearing control module is insufficient.

Optionally, the logic switch unit includes: a first power switch unit connected, at a drain, to a positive electrode of a power supply of the magnetic suspension bearing control module, connected, at a gate, to a first terminal of the energy storage unit, and connected, at a source, to the master control module; a second power switch unit connected, at a drain, to the first terminal of the energy storage unit, connected, at a gate, to negative electrodes of the rechargeable battery and the power supply of the magnetic suspension bearing control module, and connected, at a source, to an output terminal of a logic inverter; and the logic inverter connected, at an input terminal, to the master control module.

In this application, a structure of the logic switch unit is relatively simple, and DCDC conversion is implemented at relatively low hardware cost.

Optionally, the energy storage unit is an inductor.

In order to achieve the above object, this application provides refrigeration equipment according to a second aspect of the invention, including the above-mentioned magnetic suspension bearing control system described with reference to the first aspect of the invention.

When applied to the refrigeration equipment, the compressor of the refrigeration equipment can be started more quickly since the magnetic suspension bearing can be powered simultaneously by the battery management module and the power supply. In addition, an operating frequency of the compressor is correspondingly adjusted according to a current refrigeration demand, and accordingly, the rotational speed of the magnetic suspension bearing also changes. The magnetic suspension bearing control system according to this application can charge the battery management module when the bearing decelerates, and discharge when the bearing accelerates, thereby assisting the power supply in controlling the magnetic suspension bearing. This design not only makes the response speed of the refrigeration equipment faster, but also makes full use of energy and reduces energy consumption loss.

In order to achieve the above object, this application provides a method for controlling the magnetic suspension bearing control system of the first aspect of the invention, including the following steps: detecting a supply voltage of the magnetic suspension bearing; charging an uninterruptible power supply (UPS) with the supply voltage when the supply voltage is excessive; and supplying power by the UPS when the supply voltage is insufficient.

The magnetic suspension bearing control method brings the following technical effects through intelligent power management, in combination with the detection of the supply voltage and the use of UPS (uninterruptible power supply).

Improved system stability and reliability: By detecting the supply voltage of the magnetic suspension bearing and switching to the UPS power supply in time when the voltage is insufficient, the system is ensured to continue to operate stably when the voltage fluctuates or an external power supply fails. This redundant power supply solution effectively avoids equipment shutdown or failure caused by a power outage, and improves system reliability.

Optimized power usage efficiency: When the voltage is excessive, power waste can be avoided by charging the UPS power supply, while ensuring that the UPS power supply has sufficient power when needed. This dynamic power management not only saves energy, but also can reasonably utilize resources when the power grid supplies sufficient power, thereby improving the overall energy usage efficiency.

Extended equipment service life: When the power supply is unstable or insufficient, the system can automatically switch to the UPS to supply power, thereby avoiding potential damage to the equipment caused by low voltage operation and extending the service life of the equipment.

The magnetic suspension bearing control system and control method according to this application at least include the following advantages.

Improved energy efficiency: By storing excess energy of the magnetic suspension bearing into the battery, energy waste can be reduced. Especially in the process of frequency reduction and frequency increase of the compressor, energy can be allocated more reasonably.

Faster system response time: During the process of frequency reduction, the battery is charged to absorb excess energy, thereby accelerating a frequency reduction speed of the system. During starting in a frequency-increasing manner, the battery is discharged to provide additional energy for the magnetic suspension bearing system, which shortens the start time and makes the activation of the magnetic suspension bearing faster and smoother.

Enhanced system reliability: The battery serving as an uninterruptible power supply (UPS) can continuously supply power to the system in the case of a sudden power outage, which ensures stable control of the magnetic suspension bearing and avoids system faults caused by the sudden power outage. The presence of the battery can also ensure that more fault data can be saved, facilitating subsequent diagnosis and maintenance.

Reduced hardware cost and size: The magnetic suspension bearing control and the battery control are integrated into a unified control topology, which not only reduces independent hardware components required by the system, but also reduces the hardware size, thereby reducing the overall system cost.

In summary, the technical solution realizes efficient energy management and stable system operation by integrating the magnetic suspension bearing control module and the battery management module, and the integrated design saves space in the equipment.

### BRIEF DESCRIPTION OF THE SEVERAL VIEWS OF THE DRAWINGS

Certain exemplary embodiments will now be described in greater detail by way of example only, and with reference to the accompanying drawings, in which:
Fig. 1 is a schematic structural diagram of a magnetic suspension bearing control system.
Fig. 2 is a schematic structural diagram of a magnetic suspension bearing control module of the magnetic suspension bearing control system shown in Fig. 1.
Fig. 3 is a schematic structural diagram of a power supply in the magnetic suspension bearing control module shown in Fig. 2.
Fig. 4 is a schematic structural diagram of a master control module of the magnetic suspension bearing control system shown in Fig. 1.
Fig. 5 is a schematic structural diagram of the master control module of the magnetic suspension bearing control system shown in Fig. 1.
Fig. 6 is a schematic structural diagram of the master control module of the magnetic suspension bearing control system shown in Fig. 1.
Fig. 7 is a schematic structural diagram of the magnetic suspension bearing control system.
Fig. 8 is a schematic diagram of steps of a magnetic suspension bearing control method.
Fig. 9 is a schematic structural diagram of refrigeration equipment.

### DETAILED DESCRIPTION OF THE DISCLOSURE

The technical solution in some embodiments of this application will be clearly and completely described below with reference to the accompanying drawings in some embodiments of this application, and obviously, the described embodiment is merely a part of embodiments of this application, and is not all embodiments. Based on the embodiment of this application, all other embodiments obtained by those skilled in the art without creative efforts shall fall within the scope of this application.

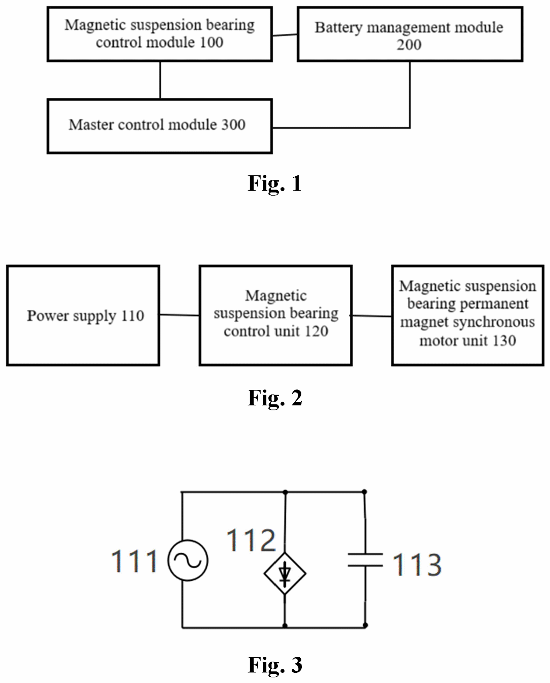

This embodiment provides a magnetic suspension bearing control system, as shown in Fig. 1, including: a magnetic suspension bearing control module 100 configured to control a magnetic suspension bearing; a battery management module 200 electrically connected to the magnetic suspension bearing control module 100; a master control module 300 connected to the magnetic suspension bearing control module 100 and the battery management module 200, respectively, and configured to control the battery management module 200 to store electric energy of the magnetic suspension bearing control module when a voltage of the magnetic suspension bearing control module 100 is excessive and supply power to the magnetic suspension bearing control module 100 when the magnetic suspension bearing control module 100 is underpowered.

It should be noted that the term "excessive voltage" mentioned in some embodiments not only includes an excessively high voltage caused by a fluctuation of a grid mains voltage, but also includes a voltage redundancy caused by a low rotational speed and current demand of a magnetic suspension bearing in specific application scenarios.

Similarly, the term "insufficient voltage" mentioned in some embodiments not only includes the extreme situations such as an excessively low voltage or power outage caused by the fluctuation of the grid mains voltage, but also includes the situation that the magnetic suspension bearing is accelerated to start when the system is quickly started, which can also be determined that the voltage is insufficient, and the battery management module 200 is introduced to assist in supplying power to the magnetic suspension bearing.

The technical effects mainly include the following aspects.

Improving system reliability and stability: Through the cooperation of the battery management module 200 and the magnetic suspension bearing control module 100, the system can automatically provide the backup power when there is a problem with the power supply of the magnetic suspension bearing control module 200. **In** this way, when a main power supply fluctuates or is powered off, the magnetic suspension bearing (AMB) can still operate normally, thereby avoiding system failure or shutdown due to insufficient power supply. Especially in high-speed rotating machinery, the stability of the magnetic suspension bearing is critical, and this technology effectively improves the safety and stability of the system.

Energy saving and energy management optimization: **In** this technical solution, the battery management module 200 stores redundant electric energy when a rotational speed demand of the magnetic suspension bearing is relatively low, and releases the stored electric energy when the magnetic suspension bearing is underpowered. The energy management mechanism not only improves the energy utilization efficiency of the system, but also reduces unnecessary energy waste. For example, when the system is in light load or a deceleration mode, an energy demand of the magnetic suspension bearing system is reduced, and the battery can effectively store this excess energy and release the excess energy when needed.

Improving dynamic performance and rapidly responding to power supply demands: The battery management module 200 in the system can quickly provide electric energy when the magnetic suspension bearing control module 100 is underpowered, thereby ensuring continuous and stable operation of the magnetic suspension bearing system. This rapid response capability plays an important role especially when the power supply fluctuates, and can compensate for the power gap in time, thereby avoiding system performance degradation or sudden failures.

Enabling modular and integrated design to reduce system costs: The master control module 300 is connected to the magnetic suspension bearing control module 100 and the battery management module 200, thereby implementing centralized control and coordinated operation of the system. Through the integrated control logic, the hardware and software architecture of the system are simplified, and the required control components and cables are reduced, which not only reduces the cost, but also reduces the occupied space of the system, thereby helping to improve the overall compactness and reliability of the equipment. **In** some embodiments, at least some of the circuits in the master control module 300, the magnetic suspension bearing control module 100 and the battery management module 200 can be integrated into one chip, and other peripheral circuits or peripheral circuits unsuitable for integration into the chip can be arranged adjacent to each other to reasonably utilize and save space.

Enhancing system fault protection capability: **In** a critical application scenario, such as an industrial compressor or a turbine, a sudden power outage or insufficient power supply of the system may cause serious faults. **In** this solution, emergency power supply is provided for the magnetic suspension bearing through the battery, and continuous operation of the system is ensured when a power failure occurs, thereby avoiding unexpected shutdowns or equipment damage. This greatly improves the fault tolerance and fault recovery capability of the system.

The technical solution of the magnetic suspension bearing control system enhances the stability, energy efficiency and response speed of the system through the coordinated operation of the battery management module and the master control module, and effectively prolongs the service life of the equipment and reduces the maintenance cost. This integrated solution provides a safer, more reliable and economical operating environment for high-performance and high-precision mechanical equipment.

Optionally, as shown in Fig. 2, the magnetic suspension bearing control module 100 includes a power supply 110, a magnetic suspension bearing control unit 120, and a magnetic suspension bearing-permanent magnet synchronous motor unit 130. The power supply 110 supplies power to the magnetic suspension bearing control module 100, and an output terminal of the power supply 110 is connected to an input terminal of the magnetic suspension bearing control unit 120. The magnetic suspension bearing control unit 120 is connected to the magnetic suspension bearing-permanent magnet synchronous motor unit 130, and can control the magnetic suspension bearing-permanent magnet synchronous motor unit 130.

The magnetic suspension bearing control unit 120 can precisely control the magnetic suspension bearing. The working principle of the magnetic suspension bearing is to suspend and support a rotating shaft through electromagnetic force to avoid mechanical contact and friction. During operation, the magnetic suspension bearing control unit 120 adjusts the current and voltage of an electromagnetic coil in real time to control the strength and direction of the electromagnetic force, thereby maintaining stable suspension of the rotor. This contactless magnetic suspension state reduces friction and wear, and ensures efficient operation of rotating machinery. The magnetic suspension bearing control unit 120 can also quickly adjust the electromagnetic force according to a signal fed back by a position sensor of the rotating shaft, so as to compensate for the vibration or deviation of the rotating shaft during high-speed operation, and ensure that the shaft is suspended in an ideal position. Through this real-time adjustment, the system can control the stability of a rotor with extremely high precision.

The magnetic suspension bearing-permanent magnet synchronous motor unit 130 includes a magnetic suspension bearing. The magnetic suspension bearing is responsible for suspending and supporting the rotating shaft, and specifically controlling the magnetic force generated by an electromagnetic coil to achieve contactless support. As the magnetic suspension bearing control unit 120 adjusts a coil current in real time, the suspension force can remain stable, ensuring that no physical collision occurs when the rotating shaft rotates at high speed.

Further, a permanent magnet synchronous motor (PMSM) is connected to the magnetic suspension bearing, and generates a rotational motion through the interaction between a stator current and permanent magnets on the rotor. By adjusting the phase and amplitude of the stator current, the magnetic suspension bearing control module can precisely control the rotational speed and torque of the PMSM to ensure that a mechanical system (for example, a compressor, a turbine, and the like) operates at a predetermined speed and power.

The permanent magnet synchronous motor (PMSM) is a high-efficiency motor that uses a magnetic field generated by a permanent magnet to operate synchronously with a rotating magnetic field in a stator winding. The PMSM in the magnetic suspension bearing control system is used to drive the rotation of the compressor. The PMSM can operate at different frequencies according to the demands of the compressor through the adjustment of the magnetic suspension bearing control module, and the magnetic suspension bearing control module adjusts a power supply frequency of the motor according to a real-time demand to realize the variable frequency drive of the compressor. This variable frequency drive mode allows the system to flexibly respond under different operating conditions and optimize energy efficiency.

As shown in Fig. 3, the power supply 110 includes an alternating current power supply 111, a rectifier circuit 112, and a filter capacitor 113.

The alternating current power supply 111 provides three alternating currents with a phase difference of 120 degrees, and is usually used to supply power to industrial equipment or a large motor system. A main advantage thereof is to provide more stable power transmission and higher power.

The rectifier circuit 112 is configured to convert a three-phase alternating current (AC) into a direct current (DC). A common rectifier is a diode rectifier bridge that conducts positive and negative half cycles of an alternating current to the same polarity through unidirectional conductivity of a diode, thereby forming a pulsating direct current. Each diode is conductive only in the positive half cycle of the alternating current, and directs a positive voltage to an output terminal. During the negative half cycle, the diode blocks a negative voltage and conducts a positive voltage of an adjacent phase at the corresponding time. Since the phase difference in the three-phase alternating current is 120 degrees, a rectifier can achieve a smoother DC current output.

Since the DC current output still includes ripples at this time, the power supply 110 is further provided with the filter capacitor 113 for filtering out ripples in the output. Specifically, the capacitor is used for filtering, that is, smoothing the rectified DC voltage. The rectified direct current is usually not a pure flat line, but has some pulsations or ripples. The charge and discharge characteristics of the capacitor can smooth these ripples and provide a relatively stable DC voltage. As the DC voltage rises, the capacitor charges to absorb excess electric energy. When the voltage drops, the capacitor discharges to supplement insufficient electric energy, thereby maintaining a smoother DC output. The filter capacitor 113 can ensure that the rectified direct current becomes smooth and stable before being supplied to the magnetic suspension bearing control module, thereby reducing the impact of voltage fluctuations on the system operation.

The input terminal of the magnetic suspension bearing control unit 120 is connected to the power supply 110 and is powered by the power supply 110, and the output terminal of the magnetic suspension bearing control unit 120 is connected to the magnetic suspension bearing-permanent magnet synchronous motor unit 130, so that the frequency and magnitude of an output electrical signal can be adjusted, thereby adjusting the rotational speed and torque of the magnetic suspension bearing-permanent magnet synchronous motor unit 130.

The magnetic suspension bearing control unit 120 may be composed of a three-phase inverter or a power drive circuit shown in the figure, and is usually composed of a power switching device (such as MOSFET or IGBT) and a freewheeling diode. A main function thereof is to convert the direct current (DC) into the alternating current (AC), and can adjust the output frequency and voltage based on a control signal of a control terminal to drive the permanent magnet synchronous motor (PMSM).

Specifically, in some embodiments, the power switching device implements DC-AC conversion by rapidly switching (ON and OFF). The control signal is used to adjust ON and OFF states of a switch to generate an AC voltage with different frequencies and amplitudes.

Output terminals (A, B, C) of a three-phase driver are respectively connected to three windings of the magnetic suspension bearing-permanent magnet synchronous motor unit 130, and the rotating magnetic field is generated by controlling the voltage and current of each phase, thereby driving the magnetic suspension bearing-permanent magnet synchronous motor unit 130 to rotate.

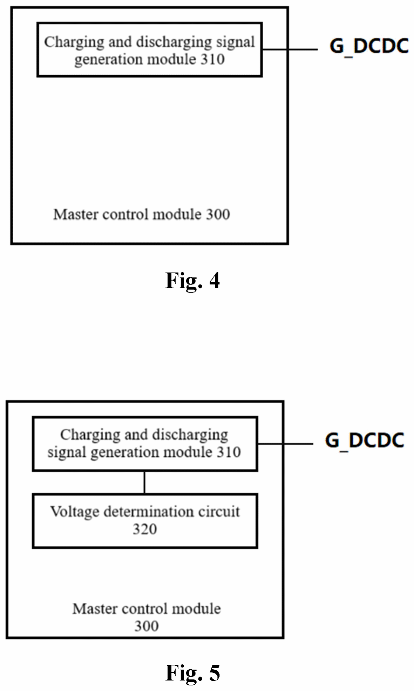

As shown in Fig. 4, the master control module 300 includes a charging and discharging signal generation module 310. The charging and discharging signal generation module 310 is connected to the control terminal of the battery management module 200, and can send a corresponding control signal to control the charging/discharging of the battery management module 200 based on a signal representing an excess/insufficient input voltage of the magnetic suspension bearing control module 100.

Optionally, as shown in Fig. 5, the master control module 300 further includes a voltage determination module 320. The voltage determination module 320 is connected to the magnetic suspension bearing control module 100 and the charging and discharging signal generation module 310, and can determine whether the input voltage of the magnetic suspension bearing control module 100 is excessive/insufficient based on the electrical signal representing the input voltage of the magnetic suspension bearing control module 100. The specific implementation of the voltage determination module 320 may be as follows: by sampling a power supply voltage of the magnetic suspension bearing control module 100 and comparing the power supply voltage with a preset threshold voltage, it is determined whether the input voltage is excessive/insufficient based on a comparison result. If the input voltage is excessive, the voltage determination module 320 sends a corresponding signal to the charging and discharging signal generation module 310, and the charging and discharging signal generation module 310 correspondingly sends a charging signal; otherwise, the charging and discharging signal generation module 310 sends a discharging signal. In addition, as described above, due to different application scenarios and usage requirements, in some embodiments, the specific standard for the excess/insufficient voltage is not limited, and those skilled in the art can use the specific logic to detect and determine whether it is necessary to introduce the battery management module 200 to assist in power supply, and the above embodiments are all within the protection scope of this application as set out in the appended claims.

It should be noted that, in some embodiments, the voltage determination module 320 may also be arranged independently (without being integrated inside the master control module 300), or may be integrated with the charging and discharging signal generation module 310. In this way, the charging and discharging signal generation module 310 may directly sample a power supply voltage of the magnetic suspension bearing control module 100, and send a corresponding control signal based on a comparison relationship between a sampling result and a preset threshold.

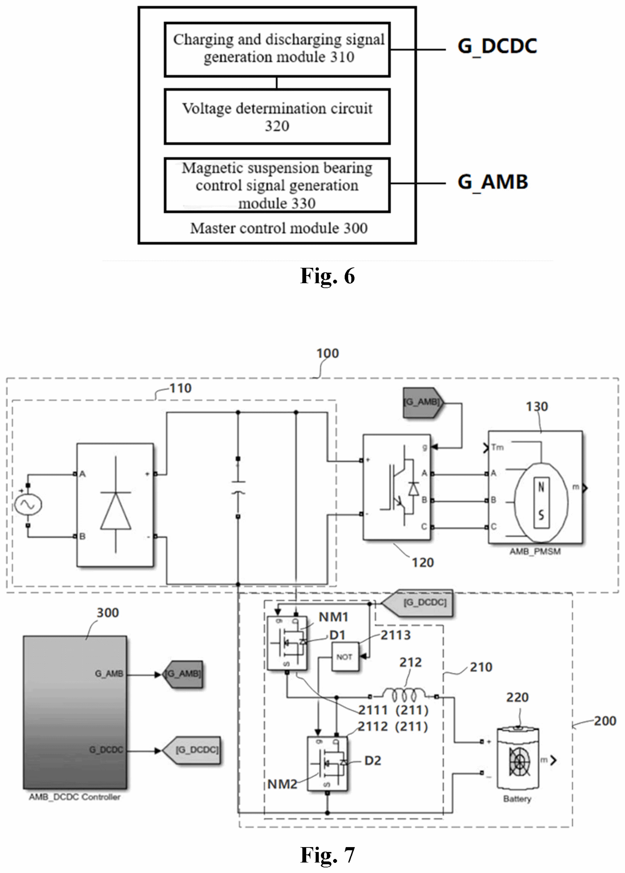

Optionally, as shown in Fig. 6, the master control module 300 further includes a magnetic suspension bearing control signal generation module 330. The magnetic suspension bearing control signal generation module 330 is connected to the magnetic suspension bearing control module 200, and can send a corresponding control signal G_AMB based on an operating status of the magnetic suspension bearing, and more specifically, the magnetic suspension bearing control signal generation module is connected to the control terminal of the magnetic suspension bearing control unit 120.

As shown in Fig. 7, the battery management module 200 includes a DCDC conversion unit 210 and a rechargeable battery 220 connected thereto. The DCDC conversion unit 210 is configured to manage a charging and discharging process of the rechargeable battery 220, which may step down a high voltage to a suitable voltage for the rechargeable battery 220 during charging, and boost a voltage of the rechargeable battery 220 to a voltage required by the magnetic suspension bearing control system during discharging.

The rechargeable battery 220 can store and release electric energy, and may specifically be a lithium-ion battery (Li-ion), a nickel-metal hydride battery (NiMH), a lead-acid battery, or a lithium iron phosphate battery (LiFePO4).

The DCDC conversion unit 210 is connected to the magnetic suspension bearing control module 100, the master control module 300 and the rechargeable battery 220, and can convert, in response to a control signal G_DCDC of the master control module 300, a charging voltage input by the magnetic suspension bearing control module 100 to the rechargeable battery 220 and a discharging voltage of the rechargeable battery 220, so that the charging voltage and the discharging voltage are adapted to the battery management module 200 and the magnetic suspension bearing control module 100.

Optionally, the DCDC conversion unit 210 includes: an energy storage unit 212 that can temporarily store charging energy of the magnetic suspension bearing control module 100 and discharging energy of the rechargeable battery 220; and a logic switch unit 211 that is connected to the master control module 300 and the energy storage unit 212, can store energy in the energy storage unit 212 through switch control in response to a signal sent by the master control module 300 indicating that the voltage of the magnetic suspension bearing control module 100 is excessive, and can releases the energy stored in the energy storage unit 212 through switch control in response to a signal sent by the master control module 300 indicating that the voltage of the magnetic suspension bearing control module 100 is insufficient.

More specifically, the logic switch unit 211 includes a first power switch unit 2111, a second power switch unit 2112 and a logic inverter 2113. The first logic switch unit 2111 is composed of a first MOS transistor NM1 and a first diode D1 in parallel, a cathode of the first diode D1 is connected to a drain of the first MOS transistor NM1, an anode of the first diode D1 is connected to a gate of the first MOS transistor NM1, and a source of the first MOS transistor NM1 and an input terminal of the logic inverter 2113 are connected to the charging and discharging signal generation module 310 of the master control module 300. The second power switch unit 2112 is composed of a second MOS transistor NM2 and a second diode D2 in parallel, a cathode of the second diode D2 is connected to a drain of the second MOS transistor NM2, an anode of the second diode D2 is connected to a gate of the second MOS transistor NM2, and a source of the second MOS transistor NM2 is connected to an output terminal of the logic inverter 2113. The gate of the first MOS transistor NM1 and the drain of the second MOS transistor NM2 are connected to a first terminal of the energy storage unit 212, and a second terminal of the energy storage unit 212 is connected to a positive electrode of the rechargeable battery 220. The gate of the second MOS transistor NM2 is connected to a negative electrode of the rechargeable battery 220 and a negative electrode of the power supply 110, and the drain of the first MOS transistor NM2 is connected to a positive electrode of the power supply 110.

The working principle of the battery management module 200 is as follows: when the magnetic suspension bearing control system has excess energy (voltage surplus), the DCDC conversion unit 210 turns on the first power switch unit 2111 in response to a first signal (charging signal) sent by the charging and discharging signal generation module 310 of the master control module 300, so that the current flows from the power supply 110 through the energy storage unit 212, and the energy storage unit 212 starts to store energy. At this time, due to the function of the logic inverter 2113, the second power switch unit 2112 is in an OFF state, and therefore, the current does not flow directly in the reverse direction from the battery 220. When the first power switch unit 2111 is turned off, the energy stored in the energy storage unit 212 is released through the second diode D2 to charge the rechargeable battery 220. By adjusting a pulse width modulation (PWM) duty cycle of the first signal, the conduction time of the first power switch unit 2111 can be controlled, thereby adjusting the voltage and current output by the DCDC conversion unit 210 to the battery 220, and ensuring that the rechargeable battery 220 is charged with an appropriate current and voltage.

When the magnetic suspension bearing control system requires the rechargeable battery 220 to provide electric energy, the DCDC conversion unit 210 turns on the second power switch unit 2112 in response to a second signal (discharging signal) sent by the charging and discharging signal generation module 310 of the master control module 300, the current flows from the rechargeable battery 220 to the energy storage unit 212, and the energy storage unit 212 stores the energy of the rechargeable battery 220. Under the action of the second signal, the first power switch unit 2111 is turned off to prevent the current from flowing back to the rechargeable battery 220 directly. When the second power switch unit 2112 is turned off, the energy stored in the energy storage unit 212 is released through the first diode D1, the current flows to a system load (magnetic suspension bearing control module 100), and the energy of the rechargeable battery 220 is boosted and then supplied to the magnetic suspension bearing control module 100.

In this way, the battery management module 200 can supply power to the system when needed, and store electric energy when the system voltage is excessive, which not only improves the management efficiency of the system energy, but also avoids the economic loss caused by the magnetic suspension bearing falling due to a sudden power outage of the power supply 110.

The magnetic suspension bearing control system according to this embodiment includes at least the following advantages.

Improved energy efficiency: By storing excess energy of the magnetic suspension bearing into the battery, energy waste can be reduced. Especially in the process of frequency reduction and frequency increase of the compressor, energy can be allocated more reasonably.

Accelerated system response time: During the process of frequency reduction, the battery is charged to absorb excess energy, thereby accelerating a frequency reduction speed of the system. During starting in a frequency-increasing manner, the battery is discharged to provide additional energy for the magnetic suspension bearing system, which shortens the start time and makes the activation of the magnetic suspension bearing faster and smoother.

Enhanced system reliability: The battery serving as an uninterruptible power supply (UPS) can continuously supply power to the system in the case of a sudden power outage, which ensures stable control of the magnetic suspension bearing and avoids system faults caused by the sudden power outage. The presence of the battery can also ensure that more fault data can be saved, facilitating subsequent diagnosis and maintenance.

Reduced hardware cost and size: The magnetic suspension bearing control and the battery control are integrated into a unified control topology, which not only reduces independent hardware components required by the system, but also reduces the hardware size, thereby reducing the overall system cost.

In summary, the technical solution realizes efficient energy management by integrating the magnetic suspension bearing control module and the battery management module.

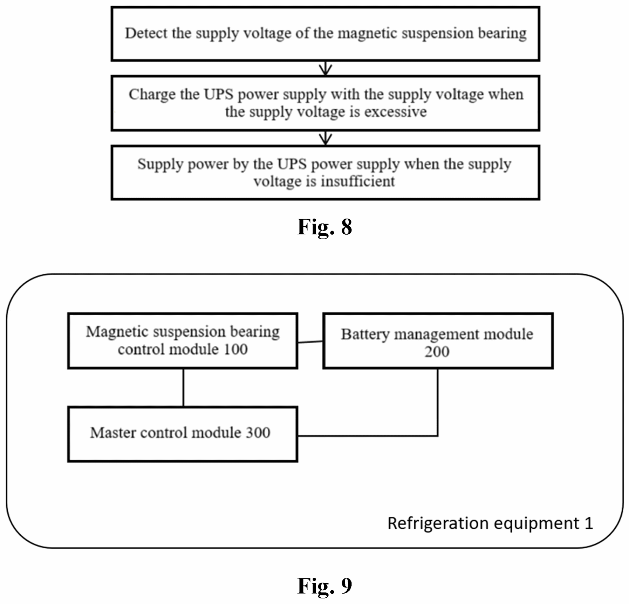

Optionally, as shown in Fig. 9, this embodiment further provides refrigeration equipment 1 that includes the magnetic suspension bearing control system according to this embodiment, which improves the dynamic performance and reliability of the refrigeration equipment 1, and also reduces the hardware cost and energy consumption of the system.

When applied to the refrigeration equipment 1, the compressor of the refrigeration equipment 1 can be started more quickly since the magnetic suspension bearing can be powered simultaneously by the battery management module and the power supply. In addition, an operating frequency of the compressor is correspondingly adjusted according to a current refrigeration demand, and accordingly, the rotational speed of the magnetic suspension bearing also changes. The magnetic suspension bearing control system according to this application can charge the battery management module when the bearing decelerates, and discharge when the bearing accelerates, thereby assisting the power supply in controlling the magnetic suspension bearing. This design not only makes the response speed of the refrigeration equipment 1 faster, but also makes full use of energy and reduces energy consumption loss.

Optionally, as shown in Fig. 8, this embodiment further provides a magnetic suspension bearing control method including the following steps: detecting a supply voltage of the magnetic suspension bearing; charging a UPS power supply with the supply voltage when the supply voltage is excessive; and supplying power by the UPS power supply when the supply voltage is insufficient.

The magnetic suspension bearing control method brings the following technical effects through intelligent power management, in combination with the detection of the supply voltage and the use of UPS (uninterruptible power supply).

Improved system stability and reliability: By detecting the supply voltage of the magnetic suspension bearing and switching to the UPS power supply in time when the voltage is insufficient, the system is ensured to continue to operate stably when the voltage fluctuates or an external power supply fails. This redundant power supply solution effectively avoids equipment shutdown or failure caused by power outage, and improves system reliability.

Optimized electric energy usage efficiency: When the voltage is excessive, power waste can be avoided by charging the UPS power supply, while ensuring that the UPS power supply has sufficient power when needed. This dynamic power management not only saves energy, but also can reasonably utilize resources when the power grid supplies sufficient power, thereby improving the overall energy usage efficiency.

Extended equipment service life: When the power supply is unstable or insufficient, the system can automatically switch to the UPS to supply power, thereby avoiding potential damage to the equipment caused by low voltage operation and extending the service life of the equipment.

Enhanced system emergency response capability: Automatic switching of the UPS power supply enables the magnetic suspension bearing system to maintain normal operation during a power outage or voltage fluctuation and have emergency response capability. This is particularly important in critical systems or continuously operating refrigeration equipment 1, avoiding system paralysis due to a sudden power outage.

Reduced maintenance and downtime: When the power supply is abnormal, the system does not need manual switching or shut down for repair, which reduces downtime and maintenance work caused by power problems, and further improves the operation efficiency of the system.

In summary, the control method ensures stable and efficient operation of the magnetic suspension bearing system through reasonable power management and power supply switching, thereby improving the reliability, energy utilization efficiency and service life of the system.

The technical solutions of this application have been described with reference to the accompanying drawings. However, it is easily understood by those skilled in the art that the protection scope of this application is obviously not limited to the above specific embodiments but is defined by the appended claims.

## Claims

1. A magnetic suspension bearing control system comprising:
a magnetic suspension bearing control module (100) configured to control a magnetic suspension bearing;
a battery management module (200) electrically connected to the magnetic suspension bearing control module; and
a master control module (300) connected to the magnetic suspension bearing control module and the battery management module, and configured to control the battery management module to store electric energy of the magnetic suspension bearing control module when a voltage of the magnetic suspension bearing control module is excessive, and supply power to the magnetic suspension bearing control module when the magnetic suspension bearing control module is underpowered, wherein the voltage of the magnetic suspension bearing control module is excessive when the voltage supplied to the magnetic suspension bearing is greater than a demand of the magnetic suspension bearing.

2. The magnetic suspension bearing control system according to claim 1, wherein the master control module (300) includes:
a charging and discharging signal generation module (310) connected to a control terminal of the battery management module (200), and configured to send a corresponding control signal to control charging/discharging of the battery management module based on a signal representing an excess/insufficient input voltage of the magnetic suspension bearing control module (100).

3. The magnetic suspension bearing control system according to claim 2, wherein the master control module (300) further includes:
a voltage determination module (320) connected to the magnetic suspension bearing control module (100) and the charging and discharging signal generation module (310), and configured to determine whether the input voltage of the magnetic suspension bearing control module is excessive/insufficient based on an electrical signal representing the input voltage of the magnetic suspension bearing control module.

4. The magnetic suspension bearing control system according to any preceding claim, wherein the master control module (300) further includes:
a magnetic suspension bearing control signal generation module (330) connected to the magnetic suspension bearing control module (100) and configured to send a corresponding control signal based on an operating status of the magnetic suspension bearing.

5. The magnetic suspension bearing control system according to any preceding claim, wherein the battery management module (200) includes:
a rechargeable battery (220); and
a DCDC conversion unit (210) connected to the magnetic suspension bearing control module (100), the master control module (300) and the rechargeable battery, and configured to convert, in response to a control signal of the master control module, a charging voltage input by the magnetic suspension bearing control module to the rechargeable battery and a discharging voltage of the rechargeable battery so as to enable the charging voltage and the discharging voltage to be adapted to the battery management module and the magnetic suspension bearing control module.

6. The magnetic suspension bearing control system according to claim 5, wherein the DCDC conversion unit (210) includes:
an energy storage unit (212) configured to temporarily store charging energy of the magnetic suspension bearing control module (100) and discharging energy of the rechargeable battery (220); and
a logic switch unit (211) connected to the master control module (300) and the energy storage unit, and configured to store energy in the energy storage unit through switch control in response to a signal sent by the master control module indicating that the voltage of the magnetic suspension bearing control module (100) is excessive, and release the energy stored in the energy storage unit through switch control in response to a signal sent by the master control module indicating that the voltage of the magnetic suspension bearing control module is insufficient.

7. The magnetic suspension bearing control system according to claim 6, wherein the logic switch unit (211) includes:
a first power switch unit (2111) connected, at a drain, to a positive electrode of a power supply (110) of the magnetic suspension bearing control module (100), connected, at a gate, to a first terminal of the energy storage unit (212), and connected, at a source, to the master control module (300);
a second power switch unit (2112) connected, at a drain, to the first terminal of the energy storage unit, connected, at a gate, to negative electrodes of the rechargeable battery (220) and the power supply of the magnetic suspension bearing control module, and connected, at a source, to an output terminal of a logic inverter (2113); and
the logic inverter connected, at an input terminal, to the master control module.

8. The magnetic suspension bearing control system according to claim 6 or 7, wherein the energy storage unit (212) is an inductor.

9. Refrigeration equipment (1) comprising the magnetic suspension bearing control system according to any preceding claim.

10. A method for controlling the magnetic suspension bearing control system of claim 1, comprising:
detecting a supply voltage of the magnetic suspension bearing;
charging an uninterruptible power supply, UPS, with the supply voltage when the supply voltage is excessive; and
supplying power by the UPS when the supply voltage is insufficient.

## Patentansprüche

1. Steuersystem für Magnetaufhängungslager, umfassend:
ein Magnetaufhängungslagersteuermodul (100), das konfiguriert ist, ein Magnetaufhängungslager zu steuern;
ein Akkumanagementmodul (200), das elektrisch mit dem Magnetaufhängungslagersteuermodul verbunden ist; und
ein Master-Steuermodul (300), das mit dem Magnetaufhängungslagersteuermodul und dem Akkumanagementmodul verbunden und konfiguriert ist, das Akkumanagementmodul zu steuern, um elektrische Energie des Magnetaufhängungslagersteuermoduls zu speichern, wenn eine Spannung des Magnetaufhängungslagersteuermoduls übermäßig ist, und das Magnetaufhängungslagersteuermodul mit Strom zu versorgen, wenn das Magnetaufhängungslagersteuermodul nicht ausreichend mit Strom versorgt ist, wobei die Spannung des Magnetaufhängungslagersteuermoduls übermäßig ist, wenn die dem Magnetaufhängungslager zugeführte Spannung größer als ein Bedarf des Magnetaufhängungslagers ist.

2. Steuersystem für Magnetaufhängungslager nach Anspruch 1, wobei das Master-Steuermodul (300) Folgendes beinhaltet:
ein Lade- und Entladesignalerzeugungsmodul (310), das mit einem Steueranschluss des Akkumanagementmoduls (200) verbunden und konfiguriert ist, ein entsprechendes Steuersignal zu senden, um das Laden/Entladen des Akkumanagementmoduls basierend auf einem Signal, das eine übermäßige/unzureichende Eingangsspannung des Magnetaufhängungslagersteuermoduls (100) darstellt, zu steuern.

3. Steuersystem für Magnetaufhängungslager nach Anspruch 2, wobei das Master-Steuermodul (300) ferner Folgendes beinhaltet: ein Spannungsbestimmungsmodul (320), das mit dem Magnetaufhängungslagersteuermodul (100) und dem Lade- und Entladesignalerzeugungsmodul (310) verbunden und konfiguriert ist, basierend auf einem elektrischen Signal, das die Eingangsspannung des Magnetaufhängungslagersteuermoduls darstellt, zu bestimmen, ob die Eingangsspannung des Magnetaufhängungslagersteuermoduls übermäßig/unzureichend ist.

4. Steuersystem für Magnetaufhängungslager nach einem der vorhergehenden Ansprüche, wobei das Master-Steuermodul (300) ferner Folgendes beinhaltet:
ein Magnetaufhängungslagersteuersignalerzeugungsmodul (330), das mit dem Magnetaufhängungslagersteuermodul (100) verbunden und konfiguriert ist, ein entsprechendes Steuersignal basierend auf einem Betriebszustand des Magnetaufhängungslagers zu senden.

5. Steuersystem für Magnetaufhängungslager nach einem der vorhergehenden Ansprüche, wobei das Akkumanagementmodul (200) Folgendes beinhaltet:
einen wiederaufladbaren Akku (220); und
eine DC/DC-Wandlereinheit (210), die mit dem Magnetaufhängungslagersteuermodul (100), dem Master-Steuermodul (300) und dem wiederaufladbaren Akku verbunden und konfiguriert ist, als Reaktion auf ein Steuersignal des Master-Steuermoduls eine durch das Magnetaufhängungslagersteuermodul in den wiederaufladbaren Akku eingespeiste Ladespannung und eine Entladespannung des wiederaufladbaren Akkus umzuwandeln, so dass der Ladespannung und der Entladespannung ermöglicht wird, an das Akkumanagementmodul und das Magnetaufhängungslagersteuermodul angepasst zu werden.

6. Steuersystem für Magnetaufhängungslager nach Anspruch 5, wobei die DC/DC-Wandlereinheit (210) Folgendes beinhaltet:
eine Energiespeichereinheit (212), die konfiguriert ist, Ladeenergie des Magnetaufhängungslagersteuermoduls (100) und Entladeenergie des wiederaufladbaren Akkus (220) vorübergehend zu speichern; und
eine Logikschalteinheit (211), die mit dem Master-Steuermodul (300) und der Energiespeichereinheit verbunden und konfiguriert ist, Energie in der Energiespeichereinheit durch Schaltsteuerung als Reaktion auf ein durch das Master-Steuermodul gesendetes Signal, das angibt, dass die Spannung des Magnetaufhängungslagersteuermoduls (100) übermäßig ist, zu speichern und die in der Energiespeichereinheit gespeicherte Energie durch Schaltsteuerung als Reaktion auf ein durch das Master-Steuermodul gesendetes Signal, das angibt, dass die Spannung des Magnetaufhängungslagersteuermoduls unzureichend ist, freizusetzen.

7. Steuersystem für Magnetaufhängungslager nach Anspruch 6, wobei die Logikschalteinheit (211) Folgendes beinhaltet:
eine erste Leistungsschalteinheit (2111), die an einem Drain mit einer positiven Elektrode einer Stromversorgung (110) des Magnetaufhängungslagersteuermoduls (100) verbunden ist, an einem Gate mit einem ersten Anschluss der Energiespeichereinheit (212) verbunden ist und an einer Source mit dem Master-Steuermodul (300) verbunden ist;
eine zweite Leistungsschalteinheit (2112), die an einem Drain mit dem ersten Anschluss der Energiespeichereinheit verbunden ist, an einem Gate mit negativen Elektroden des wiederaufladbaren Akkus (220) und der Stromversorgung des Magnetaufhängungslagersteuermoduls verbunden ist und an einer Source mit einem Ausgangsanschluss eines Logikinverters (2113) verbunden ist; und
wobei der Logikinverter an einem Eingangsanschluss mit dem Master-Steuermodul verbunden ist.

8. Steuersystem für Magnetaufhängungslager nach Anspruch 6 oder 7, wobei die Energiespeichereinheit (212) ein Induktor ist.

9. Kühlvorrichtung (1), umfassend das Steuersystem für Magnetaufhängungslager nach einem der vorhergehenden Ansprüche.

10. Verfahren zur Steuerung des Steuersystems für Magnetaufhängungslager nach Anspruch 1, umfassend:
Erkennen einer Versorgungsspannung des Magnetaufhängungslagers; Laden einer unterbrechungsfreien Stromversorgung, USV, mit der Versorgungsspannung, wenn die Versorgungsspannung übermäßig ist; und
Zuführen von Strom durch die USV, wenn die Versorgungsspannung unzureichend ist.

## Revendications

1. Système de commande de palier de suspension magnétique comprenant :
un module de commande de palier de suspension magnétique (100) configuré pour commander un palier de suspension magnétique ;
un module de gestion de batterie (200) connecté électriquement au module de commande de palier de suspension magnétique ; et
un module de commande maître (300) connecté au module de commande de palier de suspension magnétique et au module de gestion de batterie, et configuré pour commander au module de gestion de batterie de stocker l'énergie électrique du module de commande de palier de suspension magnétique lorsqu'une tension du module de commande de palier de suspension magnétique est excessive, et de fournir de l'énergie au module de commande de palier de suspension magnétique lorsque le module de commande de palier de suspension magnétique est sous-alimenté, dans lequel la tension du module de commande de palier de suspension magnétique est excessive lorsque la tension fournie au palier de suspension magnétique est supérieure à une demande du palier de suspension magnétique.

2. Système de commande de palier de suspension magnétique selon la revendication 1, dans lequel le module de commande maître (300) comporte :
un module de génération de signal de charge et de décharge (310) connecté à un terminal de commande du module de gestion de batterie (200), et configuré pour envoyer un signal de commande correspondant pour commander la charge/décharge du module de gestion de batterie sur la base d'un signal représentant une tension d'entrée excessive/insuffisante du module de commande de palier de suspension magnétique (100).

3. Système de commande de palier de suspension magnétique selon la revendication 2, dans lequel le module de commande maître (300) comporte en outre :
un module de détermination de tension (320) connecté au module de commande de palier de suspension magnétique (100) et au module de génération de signal de charge et de décharge (310), et configuré pour déterminer si la tension d'entrée du module de commande de palier de suspension magnétique est excessive/insuffisante sur la base d'un signal électrique représentant la tension d'entrée du module de commande de palier de suspension magnétique.

4. Système de commande de palier de suspension magnétique selon une quelconque revendication précédente, dans lequel le module de commande maître (300) comporte en outre :
un module de génération de signal de commande de palier de suspension magnétique (330) connecté au module de commande de palier de suspension magnétique (100) et configuré pour envoyer un signal de commande correspondant sur la base d'un état de fonctionnement du palier de suspension magnétique.

5. Système de commande de palier de suspension magnétique selon une quelconque revendication précédente, dans lequel le module de gestion de batterie (200) comporte :
une batterie rechargeable (220) ; et
une unité de conversion CC-CC (210) connectée au module de commande de palier de suspension magnétique (100), au module de commande maître (300) et à la batterie rechargeable, et configurée pour convertir, en réponse à un signal de commande du module de commande maître, une tension de charge entrée au moyen du module de commande de palier de suspension magnétique à la batterie rechargeable et une tension de décharge de la batterie rechargeable afin de permettre à la tension de charge et à la tension de décharge d'être adaptées au module de gestion de batterie et au module de commande de palier de suspension magnétique.

6. Système de commande de palier de suspension magnétique selon la revendication 5, dans lequel l'unité de conversion CC-CC (210) comporte :
une unité de stockage d'énergie (212) configurée pour stocker temporairement l'énergie de charge du module de commande de palier de suspension magnétique (100) et l'énergie de décharge de la batterie rechargeable (220) ; et
une unité de commutateur logique (211) connectée au module de commande maître (300) et à l'unité de stockage d'énergie, et configurée pour stocker l'énergie dans l'unité de stockage d'énergie par le biais d'une commande de commutateur en réponse à un signal envoyé par le module de commande maître indiquant que la tension du module de commande de palier de suspension magnétique (100) est excessive, et libérer l'énergie stockée dans l'unité de stockage d'énergie par le biais d'une commande de commutateur en réponse à un signal envoyé par le module de commande maître indiquant que la tension du module de commande de palier de suspension magnétique est insuffisante.

7. Système de commande de palier de suspension magnétique selon la revendication 6, dans lequel l'unité de commutateur logique (211) comporte :
une première unité de commutateur d'alimentation (2111) connectée, au niveau d'un drain, à une électrode positive d'une alimentation électrique (110) du module de commande de palier de suspension magnétique (100), connectée, au niveau d'une grille, à une première borne de l'unité de stockage d'énergie (212), et connectée, au niveau d'une source, au module de commande maître (300) ;
une seconde unité de commutateur d'alimentation (2112) connectée, au niveau d'un drain, à la première borne de l'unité de stockage d'énergie, connectée, au niveau d'une grille, aux électrodes négatives de la batterie rechargeable (220) et à l'alimentation électrique du module de commande de palier de suspension magnétique, et connectée, au niveau d'une source, à une borne de sortie d'un onduleur logique (2113) ; et
l'onduleur logique connecté, au niveau d'une borne d'entrée, au module de commande maître.

8. Système de commande de palier de suspension magnétique selon la revendication 6 ou 7, dans lequel l'unité de stockage d'énergie (212) est une bobine d'inductance.

9. Équipement de réfrigération (1) comprenant le système de commande de palier de suspension magnétique selon une quelconque revendication précédente.

10. Procédé de commande du système de commande de palier de suspension magnétique selon la revendication 1, comprenant :
la détection d'une tension d'alimentation du palier de suspension magnétique ;
la charge d'une alimentation électrique sans interruption (ASI) avec la tension d'alimentation lorsque la tension d'alimentation est excessive ; et
l'alimentation électrique au moyen de l'ASI lorsque la tension d'alimentation est insuffisante.
